# EUROPEAN PATENT SPECIFICATION

(11) **EP 4 287 321 B1**
(45) Date of publication and mention of the grant of the patent: **15.04.2026**
(21) Application number: 22745841.1
(22) Date of filing: 25.01.2022
(51) Int. Cl.: H01M 4/58, H01M 10/052, H01M 10/0568, H01M 10/0569, H01M 4/38, H01M 10/0567, H01M 4/02

(54) **ELECTROLYTIC SOLUTION FOR NON-AQUEOUS SECONDARY BATTERY, AND NON-AQUEOUS SECONDARY BATTERY**
ELEKTROLYTLÖSUNG FÜR EINE WASSERFREIE SEKUNDÄRBATTERIE UND WASSERFREIE SEKUNDÄRBATTERIE
SOLUTION ÉLECTROLYTIQUE POUR BATTERIE SECONDAIRE NON AQUEUSE, ET BATTERIE SECONDAIRE NON AQUEUSE

(30) Priority: 27.01.2021 JP 2021010817
(43) Date of publication of application: 06.12.2023
(73) Proprietor: National Institute of Advanced Industrial Science and Technology, Chiyoda-ku Tokyo 100-8921 (JP)
(72) Inventor: MAEYOSHI, Yuta, Ikeda-shi, Osaka 563-8577 (JP); YOSHII, Kazuki, Ikeda-shi, Osaka 563-8577 (JP); SAKAEBE, Hikari, Ikeda-shi, Osaka 563-8577 (JP)
(74) Representative: Patentanwälte Gierlich & Pischitzis Partnerschaft mbB
(86) International application number: PCT/JP2022/002570
(87) International publication number: WO 2022/163620

(56) References cited:
- WO-A1-2018/181698
- CN-A- 110 336 078
- CN-A- 111 276 744
- CN-A- 111 276 744
- JP-A- 2020 161 428
- US-A1- 2019 148 775
- SHIN WOOCHUL ET AL: "Fluorinated co-solvent promises Li-S batteries under lean-electrolyte conditions", MATERIALS TODAY, ELSEVIER, AMSTERDAM, NL, vol. 40, 15 July 2020 (2020-07-15), pages 63 - 71, XP086379109, ISSN: 1369-7021, [retrieved on 20200715], DOI: 10.1016/J.MATTOD.2020.06.007

## Description

### Technical Field

The present invention relates to a nonaqueous secondary battery.

### Background Art

In recent years, along with the higher performance of portable electronic devices and the growing demand for hybrid vehicles and electric vehicles, the lithium-ion secondary batteries used for such devices and vehicles are increasingly required to have higher capacity.

However, when a lithium-based material is used as an anode active material, there is a problem in that the charge/discharge cycle performance is low. In addition, needle-like lithium tends to deposit inside the battery during use, and there are also safety problems, such as internal short circuits.

Sulfur, which has a theoretical capacity as high as about 1670 mAh/g, is a promising candidate for use as a sulfur-based cathode active material. However, the use of a sulfur-based material as a cathode active material tends to result in lost capacity after repeated charge/discharge cycles.

It has been reported that the use of vanadium sulfide as a sulfur-based cathode active material results in a certain improvement in charge/discharge cycle performance (Patent Literature (PTL) 1).

However, such batteries still do not have sufficient charge/discharge cycle performance, and further improvement is required.

### Citation List

### Patent Literature

PTL 1: WO2018/181698

### Summary of Invention

### Technical Problem

In view of the above, an object of the present invention is to provide a nonaqueous secondary battery that has excellent charge/discharge cycle performance while using a sulfur-based material as a cathode active material and that enables suppression of needle-like lithium deposition while using lithium as an anode active material.

### Solution to Problem

The present inventors conducted extensive research to achieve the above object and found that a nonaqueous secondary battery that has excellent charge/discharge performance while using a sulfur-based cathode active material and that enables suppression of needle-like lithium deposition can be provided by using specific materials in an electrolyte solution. The present invention has been accomplished through further research based on the above finding.

The technical problem mentioned above is solved by the nonaqueous secondary battery according to claim 1.

### Advantageous Effects of Invention

The use of the nonaqueous secondary battery electrolyte solution in the nonaqueous secondary battery of the present invention makes it possible to provide a secondary battery that has excellent charge/discharge cycle performance while using a sulfur-based material as a cathode active material and that enables suppression of needle-like lithium deposition although lithium is used as an anode active material.

### Brief Description of Drawings

Fig. 1 shows discharge capacity vs. cycle number of Examples and Comparative Examples.
Fig. 2 shows Coulombic efficiency vs. cycle number of Examples and Comparative Examples.
Fig. 3 shows electron microscope images of deposited lithium metal after a lithium deposition test in Examples and Comparative Examples.

### Description of Embodiments

In the present specification, the terms "comprise" and "contain" include all the concepts of comprising, consisting essentially of, and consisting of. In the present specification, a numerical range expressed as "A to B" means A or more and B or less.

### 1. Nonaqueous Secondary Battery Electrolyte Solution

The nonaqueous secondary battery of the present invention comprises vanadium sulfide as a cathode active material and a lithium-containing compound as an anode active material. The nonaqueous secondary battery electrolyte solution consists of lithium bis(fluorosulfonyl)imide (LiFSI), cyclic carbonates, and a hydrofluoroether (HFE).

The lithium bis(fluorosulfonyl)imide (which may be referred to below as "LiFSI") is a lithium salt represented by the following formula (1).

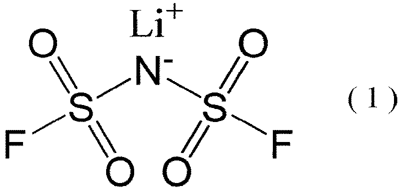

The content of LiFSI in the nonaqueous secondary battery electrolyte solution is preferably 3 to 6 mol/L in order to enhance the interaction between lithium ions, and the solvent and anions.

The cyclic carbonates are not particularly limited, and a wide range of known cyclic carbonates that can be used as organic solvents in nonaqueous secondary battery electrolyte solutions can be used. Specific examples include ethylene carbonate (which may be referred to below as "EC") represented by the following formula (2), propylene carbonate (which may be referred to below as "PC") represented by the following formula (3), butylene carbonate, and the like. These cyclic carbonates may be used singly, or in a combination of two or more.

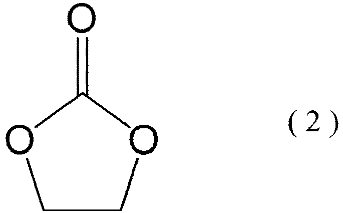

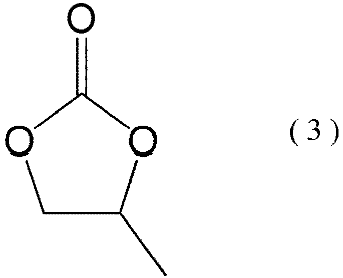

Only one of the above cyclic carbonates may be used alone as described above; however, it is preferable to use two of the above cyclic carbonates in combination. Among them, it is particularly preferable to use EC and PC in combination.

When EC and PC are used in combination, the proportions of the cyclic carbonates for use are such that the molar ratio of EC:PC is preferably 1.0:0.7 to 1.0:1.3, more preferably 1.0:0.8 to 1.0:1.2, and even more preferably 1.0:0.9 to 1.0:1.1, in order to prevent the viscosity of the electrolyte solution from becoming too high.

The molar ratio of the cyclic carbonates to the LiFSI (cyclic carbonates/LiFSI) is 3 or less, preferably 1 or more and 3 or less, and more preferably 1 or more and 2 or less, in order to enhance the interaction between lithium ions, and the solvent and anions.

The nonaqueous secondary battery electrolyte solution of the present invention further comprises a hydrofluoroether (which may be referred to below as "HFE"). The HFE is not particularly limited, and a wide range of known HFEs can be used. Among them, an HFE represented by CₐH_{b}F_{c}-O-C_{d}HₑF_{f} (wherein 2a + 1 = b + c, 2d + 1 = e + f, and a to f ≥ 1) is preferred, and an HFE represented by the following formula (4), i.e., 1,1,2,2-tetrafluoro-3-(1,1,2,2-tetrafluoroethoxy)propane, is more preferred because such an HFE mixes with an electrolyte solution containing the LiFSI and cyclic carbonates described above and does not interact with lithium ions.

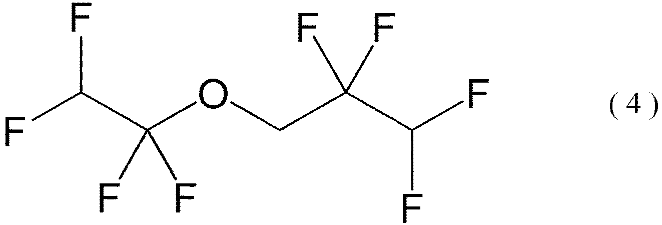

The molar ratio of the HFE used to the LiFSI (HFE/LiFSI) is preferably 1 or more and 4 or less, in order to decrease the viscosity of the electrolyte solution and ensure properties such as lithium ion conductivity of the electrolyte solution.

The nonaqueous secondary battery electrolyte solution of the present invention is typically in liquid form; however, for example, a gelled electrolyte prepared by gelation with a gelling agent containing a polymer or the like is also usable.

The nonaqueous secondary battery electrolyte solution is used in the nonaqueous secondary battery described below, which comprises a cathode active material and an anode active material.

### 2. Nonaqueous Secondary Battery

The present invention is related to a nonaqueous secondary battery comprising the nonaqueous secondary battery electrolyte solution described above. The nonaqueous secondary battery of the present invention comprises a cathode, an anode, and typically also a separator in addition to the nonaqueous secondary battery electrolyte solution.

### 2.1. Cathode

The cathode may have a configuration in which a cathode layer containing a cathode active material, a binder, etc. is formed on one surface or both surfaces of a cathode current collector.

The cathode layer can be produced through the steps of adding a binder to a cathode active material and a conductive material added as necessary, dispersing the binder in an organic solvent to prepare a paste for forming a cathode layer (in this case, the binder may be dissolved or dispersed in an organic solvent in advance), applying the paste to the surface (one surface or both surfaces) of a cathode current collector made of a metal foil or the like, drying the paste to form a cathode layer, and processing the cathode layer as necessary.

As the cathode active material, vanadium sulfide is used. The vanadium sulfide is not particularly limited, and a wide range of known vanadium sulfides can be used. Specific examples include V₃S₄, V₂S₅, and VS₄.

In the present invention, the vanadium sulfide preferably has a crystalline structure similar to that of crystalline vanadium (IV) tetrasulfide (VS₄) (which may be referred to below as "VS₄ crystalline structure"). Of course, it is particularly preferable to use VS₄ as vanadium sulfide.

More specifically, the vanadium sulfide preferably has peaks at 15.4°, 35.3°, and 45.0° in the diffraction angle range of 2θ = 10° to 80° with a tolerance of ±1.0° in an X-ray diffraction pattern obtained using Cu Kα radiation. That is, the vanadium sulfide preferably has peaks in the range of 14.4° to 16.4°, 34.3° to 36.3°, and 44.0° to 46.0°.

In the present invention, the X-ray diffraction pattern is obtained by a powder X-ray diffraction method (θ-2θ method), and measurement is performed under the following measurement conditions:
Measuring device: D8 ADVANCE (Bruker AXS)
X-ray source: Cu Kα 40 kV/40 mA
Measurement conditions: 2θ = 10° to 80°, 0.1° step, scanning
rate: 0.02°/sec.

In the present invention, the vanadium sulfide preferably has peaks at the 2θ positions mentioned above, and preferably has at least one peak at 54.0° or 56.0° (in particular, both) in the diffraction angle range of 2θ = 10° to 80° with a tolerance of ±1.0°.

In the present invention, it is preferred that although the vanadium sulfide has a high sulfur ratio in the average composition, little sulfur is present in the form of elemental sulfur as described below, and that sulfur is bound to vanadium to form a low-crystalline sulfide. Accordingly, in the present invention, the vanadium sulfide with a lower crystallinity can have more sites in which lithium ions can be inserted and extracted, and can structurally have more defects that can serve as conductive pathways for lithium in three dimensions.

In addition, the vanadium sulfide has many advantages, including the ability to undergo three-dimensional volume changes during charging and discharging. This further improves specific capacity and charge/discharge cycle performance. Moreover, it is also preferred that a vanadium sulfide (e.g., V₂S₃) used as a raw material is almost completely absent. In the present specification, the average composition of a sulfide refers to the element ratio of each element that constitutes the sulfide as a whole. As such a vanadium sulfide, a low-crystalline vanadium sulfide like that disclosed in PTL 1 is preferably used.

The following explains the phrase "low-crystalline" in the present invention. In the present invention, it is preferred that there be no peaks of the vanadium sulfide at 2θ = 15.4°, 35.3°, and 45.0°, or that if peaks appear, the full width at half maximum of all of the peaks is 0.8 to 2.0° (in particular, 1.0 to 2.0°). In crystalline vanadium (IV) sulfide (VS₄), the full width at half maximum of all of the peaks at 2θ = 15.4°, 35.3°, and 45.0° is 0.2 to 0.6°. Accordingly, in the present invention, it is preferred that there be no peaks of the vanadium sulfide at 2θ = 15.4°, 35.3°, and 45.0°, or that if peaks appear, the full width at half maximum of the peaks is larger than that of crystalline vanadium (IV) sulfide (VS₄). Accordingly, in the present invention, the low crystallinity increases the number of sites in which Li can be stably present; thus, the use of the metal sulfide of the present invention as a cathode active material makes it easier to improve specific capacity and charge/discharge cycle performance.

The use of a material containing a large amount of elemental sulfur etc. as a cathode active material is likely to cause a reaction of the cyclic carbonate compound contained in the nonaqueous secondary battery electrolyte solution of the present invention with elemental sulfur. In the present invention, however, for example, if mechanical milling is performed for a sufficient amount of time, the vanadium sulfide described above contains almost no elemental sulfur etc.; thus, even if a cyclic carbonate compound is used, the vanadium sulfide used as a cathode active material does not cause the above problem, making it easier to remarkably improve specific capacity and charge/discharge cycle performance.

More specifically, the most intense peak of sulfur (S₈) is located at 2θ = 23.0° with a tolerance of ±1.0°. It is thus preferable that the vanadium sulfide does not have a peak with a local maximum at 2θ = 23.0°, which is a peak characteristic of elemental sulfur, with a tolerance of ±1.0° in an X-ray diffraction pattern obtained using Cu Kα radiation. Alternatively, it is preferable that the area of the peak with a local maximum at 2θ = 23.0° is 20% or less (0 to 20%, in particular, 0.1 to 19%) of the area of the peak with a local maximum at 2θ = 35.3°. This allows the vanadium sulfide in the present invention to be a material that contains almost no elemental sulfur. Additionally, this also reduces concern about causing a reaction with an electrolyte solution as described above and further improves specific capacity and charge/discharge cycle performance.

In the present invention, it is also preferable that the vanadium sulfide does not have peaks at positions of 2θ = 25.8° and 27.8°, which are peaks characteristic of elemental sulfur, with a tolerance of ±1.0°, or that the area of peaks with local maxima at these positions is 10% or less (0 to 10%, in particular, 0.1 to 8%) of the area of the peak with a local maximum at 2θ = 35.3°. This allows the vanadium sulfide to be a material that contains almost no elemental sulfur. Additionally, this also reduces concern of causing a reaction with an electrolyte solution as described above and further improves specific capacity and charge/discharge cycle performance.

Vanadium sulfides satisfying the above conditions preferably have an intense peak at g(r) = 2.4 A with a tolerance of ±0.1 Å in X-ray/neutron atomic pair distribution function (PDF) analysis. Sulfides with better specific capacity and charge/discharge cycle performance more preferably have a shoulder peak at g(r) = 2.0 Å and more preferably also have a peak at g(r) = 3.3 Å. In other words, the vanadium sulfide preferably has not only V-S bonds but also S-S bonds (disulfide bonds) .

In the present invention, the vanadium sulfide described above can be obtained, for example, by a production method that includes the step of subjecting a vanadium sulfide and sulfur used as raw materials or intermediates to mechanical milling.

Mechanical milling is a method of milling and mixing raw materials while adding mechanical energy. This method adds a mechanical impact and friction to raw materials to mill and mix the materials, whereby a vanadium sulfide and sulfur intensely come into contact with each other and become fine particles to allow the reaction of the raw materials to proceed. That is, in this case, mixing, pulverization, and reaction occur simultaneously. This enables the reaction of the raw materials to reliably proceed without heating the raw materials at a high temperature. Mechanical milling may provide a metastable crystalline structure that cannot be obtained by ordinary heat treatment.

Specific examples of mechanical milling include mixing and pulverization using a mechanical pulverizer, such as a ball mill, a bead mill, a rod mill, a vibration mill, a disc mill, a hammer mill, or a jet mill.

These raw materials or intermediates may all be mixed together simultaneously and subjected to mechanical milling. Alternatively, after a portion of the raw materials or intermediates are first subjected to mechanical milling, the remaining materials may be added thereto and subjected to mechanical milling.

In particular, in the production of a vanadium sulfide with a high sulfur content (the compositional ratio of sulfur to vanadium (S/V) being 3.3 or more in terms of moles), a crystalline vanadium sulfide can be obtained depending on the mass to be fed. Thus, in order to easily obtain a low-crystalline vanadium sulfide with excellent specific capacity and charge/discharge cycle performance, it is preferred to first obtain a desired low-crystalline sulfide as an intermediate by subjecting a vanadium sulfide and a portion of sulfur to mechanical milling, and then subjecting the obtained low-crystalline sulfide and the remaining sulfur to mechanical milling.

Preferable examples of specific vanadium sulfides that can be used as raw materials include crystalline vanadium(III) sulfide (V₂S₃). The vanadium sulfide is not particularly limited, and any commercially available vanadium sulfide can be used. It is particularly preferable to use a high-purity vanadium sulfide. Since a vanadium sulfide is mixed and pulverized by mechanical milling, the particle size of the vanadium sulfide for use is also not limited. A commercially available vanadium sulfide powder can usually be used.

For sulfur, elemental sulfur (S₈) in an amount necessary to form a sulfide of a desired composition can be used. The sulfur used as a raw material is also not particularly limited, and any sulfur can be used. It is particularly preferable to use high-purity sulfur. Since sulfur is mixed and pulverized by mechanical milling, the particle size of the sulfur for use is also not limited. A commercially available sulfur powder can usually be used.

When multiple-step (in particular, two-step) mechanical milling is applied as described above, the intermediate for use may be, for example, a low-crystalline vanadium sulfide of a desired composition (e.g., low-crystalline VS_{2.5}) .

Because the ratio of the raw materials fed almost directly results in the ratio of the elements of the product, the ratio of the raw materials to be mixed may be adjusted to the elemental ratio of vanadium and sulfur in the desired vanadium sulfide. For example, sulfur is preferably used in an amount of 1.2 mol or more, in particular, 1.2 to 17.0 mol, and more preferably 3.0 to 13.0 mol, per mol of vanadium sulfide.

The temperature at which mechanical milling is performed is not particularly limited. In order to prevent the volatilization of sulfur and the formation of the crystalline phases previously reported, the temperature during the mechanical milling is preferably 300°C or lower, and more preferably -10 to 200°C.

The time during which mechanical milling is performed is not particularly limited. Mechanical milling can be performed for any length of time until a desired vanadium sulfide is precipitated.

The atmosphere in which mechanical milling is performed is not particularly limited and may be an inert gas atmosphere, such as a nitrogen gas atmosphere or an argon gas atmosphere.

For example, mechanical milling can be performed for 0.1 to 100 hours (in particular, 15 to 80 hours). Mechanical milling may optionally be performed multiple times with pauses in between.

When mechanical milling is performed multiple times, the above conditions can be applied in each mechanical milling step.

The mechanical milling described above can provide a desired vanadium sulfide in fine powder form.

As a conductive material, graphite; carbon black (e.g., acetylene black and Ketjen black); amorphous carbon materials, such as carbon materials with amorphous carbon generated on a surface thereof; fibrous carbon (vapor-phase grown carbon fiber, carbon fiber obtained by carbonization treatment after spinning pitch, etc.); carbon nanotubes (various types of multi-layered or single-layered carbon nanotubes); etc. can be used in the same manner as in an ordinary nonaqueous secondary battery. For the conductive material for the cathode, these materials may be used singly, or in a combination of two or more.

Examples of the binder include polyvinylidene fluoride (PVDF), polytetrafluoroethylene, polyacrylic acid, styrenebutadiene rubber, polyimide, polyvinyl alcohol, and water-soluble carboxymethyl cellulose.

The organic solvent used in producing the cathode layer is not particularly limited, and examples include N-methylpyrrolidone (NMP). A paste can be formed from the organic solvent, a cathode active material, a binder, etc.

Regarding the composition of the cathode layer, for example, it is preferred that the cathode active material is present in an amount of about 70 to 95 wt% and that the binder is present in an amount of about 1 to 30 wt%. When a conductive material is used, it is preferred that the cathode active material is present in an amount of about 50 to 90 wt%, that the binder is present in an amount of about 1 to 20 wt%, and that the conductive material is present in an amount of about 1 to 40 wt%. Furthermore, the thickness of the cathode layer is preferably about 1 to 100 µm per surface of the current collector.

As the cathode current collector, for example, a foil, punched metal, expanded metal, net, or the like of aluminum, stainless steel, nickel, titanium, or an alloy thereof can be used. Typically, an aluminum foil having a thickness of about 10 to 30 µm is preferably used.

### 2.2. Anode

The anode may have a configuration in which an anode layer containing an anode active material, a binder, etc. is formed on one surface or both surfaces of an anode current collector.

The anode layer can be produced through the steps of mixing a binder with an anode active material and a conductive material added as necessary to form a sheet, and pressure-bonding the sheet to the surface (one surface or both surfaces) of an anode current collector made of a metal foil or the like.

As the anode active material, a lithium-containing compound is used. Specific examples include lithium metal, lithium alloys, and the like. A material that can be doped or undoped with lithium ions (graphite (e.g., natural graphite and artificial graphite), sintering-resistant carbon, etc.), or the like can also be used as the active material. These anode active materials may be used singly, or in a combination of two or more.

As a conductive material, graphite; carbon black (e.g., acetylene black and Ketjen black); amorphous carbon materials, such as carbon materials with amorphous carbon generated on a surface thereof; fibrous carbon (vapor-phase grown carbon fiber, carbon fiber obtained by carbonization treatment after spinning pitch, etc.); carbon nanotubes (various types of multi-layered or single-layered carbon nanotubes); etc. can be used in the same manner as in an ordinary nonaqueous secondary battery. For the conductive material for the anode, these materials may be used singly, or in a combination of two or more, or may not be used when the conductivity of the anode active material is high.

Examples of the binder include polyvinylidene fluoride (PVDF), polytetrafluoroethylene, polyacrylic acid, styrenebutadiene rubber, polyimide, polyvinyl alcohol, and water-soluble carboxymethyl cellulose.

Regarding the composition of the anode layer, for example, it is preferred that the anode active material is present in an amount of about 70 to 95 wt% and that the binder is present in an amount of about 1 to 30 wt%. When a conductive material is used, it is preferred that the anode active material is present in an amount of about 50 to 90 wt%, that the binder is present in an amount of about 1 to 20 wt%, and that the conductive material is present in an amount of about 1 to 40 wt%. Furthermore, the thickness of the anode layer is preferably about 1 to 100 µm per surface of the current collector.

As the anode current collector, for example, a foil, punched metal, expanded metal, mesh, net, or the like of aluminum, copper, stainless steel, nickel, titanium, or an alloy thereof can be used. Typically, a copper foil having a thickness of about 5 to 30 µm is preferably used.

### 2.3. Separator

The cathode and the anode described above are used in the form of, for example, a laminated electrode prepared by laminating the cathode and the anode with an interjacent separator between them, or in the form of a spiral-wound electrode prepared by further winding the laminated electrode into a spiral shape.

The separator preferably has sufficient strength and can retain as much electrolyte solution as possible. From these viewpoints, the separator is preferably a microporous film, a non-woven fabric, or the like that has a thickness of 10 to 50 µm and an open-pore ratio of 30 to 70%, and that contains at least one of the following: polyethylene, polypropylene, an ethylenepropylene copolymer, etc.

Examples of the form of the nonaqueous secondary battery of the present invention include a cylindrical shape (e.g., a rectangular tube shape or circular tube shape) that uses a stainless-steel can, an aluminum can, or the like as an outer can. Further, a soft-package battery that uses a laminate film integrated with a metal foil as its exterior body can also be used.

The embodiments of the present invention are described above.

### Examples

The embodiments of the present invention are described in more detail below based on Examples; however, the present invention is not limited thereto.

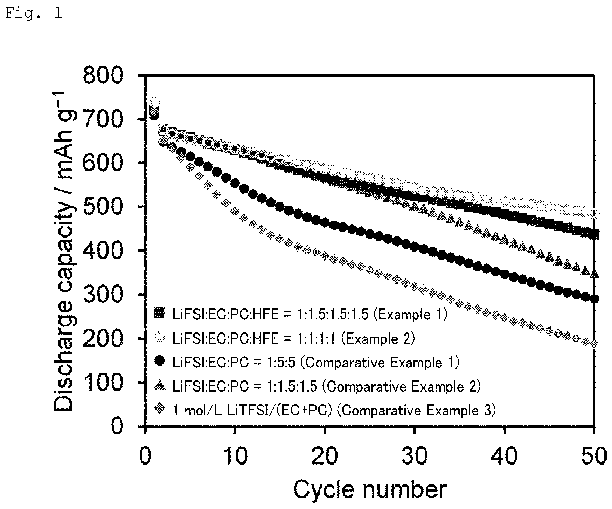

Constant-current charge-and-discharge measurement of two-electrode nonaqueous secondary batteries having a diameter of about 60 mm and a height of about 20 mm was performed. In the two-electrode nonaqueous secondary batteries, solutions obtained by mixing LiFSI, EC, PC, and HFE at 1:1.5:1.5:1.5 (molar ratio) and at 1:1:1:1 (molar ratio) (Example 1 and Example 2, respectively), solutions obtained by mixing LiFSI, EC, and PC at 1:5:5 and at 1:1.5:1.5 (Comparative Example 1 and Comparative Example 2, respectively), and a 1 mol/L lithium bis(trifluoromethanesulfonyl)imide (LiTFSI)/(EC+PC) (EC:PC = 1:1 (volume ratio)) electrolyte solution (Comparative Example 3) were used, low-crystalline VS₄ synthesized by the method disclosed in PTL 1 was used for a cathode, and lithium metal was used for an anode. The VS₄ cathode layer had a thickness of about 15 µm and a diameter of 15 mm, and the weight per area of the active material was about 1.74 mg/cm². The lithium metal anode had a thickness of about 200 µm and a diameter of 15 mm. The amount of each electrolyte solution was 400 µL. The temperature was 25°C, the voltage range was 1.5 V to 2.6 V, the number of cycles was 50, and the current value was 240 mA/g based on the VS₄ weight. Fig. 1 shows the obtained discharge capacity vs. cycle number plot.

As shown in Fig. 1, when the 1 mol/L LiTFSI/(EC+PC) (EC:PC = 1:1 (volume ratio)) electrolyte solution (Comparative Example 3) was used, the capacity tended to decrease significantly as the number of charge-and-discharge cycles increased, and the capacity at 50 cycles was 218 mAh/g. When the low-concentration LiFSI:EC:PC = 1:5:5 (molar ratio) electrolyte solution (Comparative Example 1) was used, the capacity tended to decrease as the number of charge-and-discharge cycles increased. On the other hand, when the high-concentration LiFSI:EC:PC = 1:1.5:1.5 (molar ratio) electrolyte solution (Comparative Example 2) was used, the decrease in capacity with increasing charge-and-discharge cycles was suppressed. When the LiFSI:EC:PC:HFE = 1:1.5:1.5:1.5 (molar ratio) electrolyte solution (Example 1) was used and when the LiFSI:EC:PC:HFE = 1:1:1:1 (molar ratio) electrolyte solution (Example 2) was used, the decrease in capacity with increasing charge-and-discharge cycles was further suppressed, and the capacity at 50 cycles was 437 mAh/g and 485 mAh/g. Thus, the results show that the use of the electrolyte solution of the present invention can improve the cycle life of nonaqueous secondary batteries containing vanadium sulfide as a cathode and lithium metal as an anode.

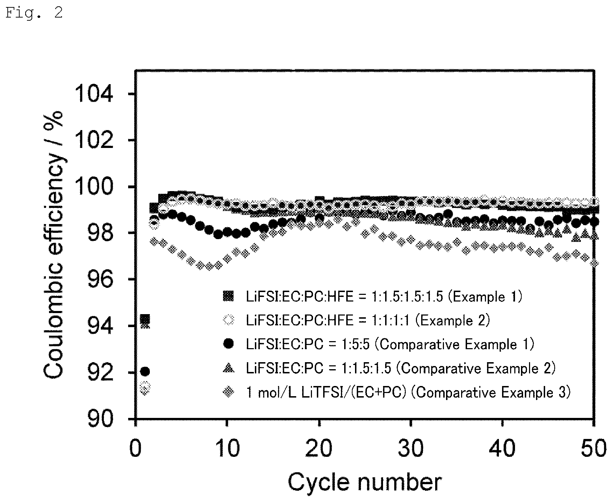

The Coulombic efficiency of the VS₄/lithium metal secondary batteries using each individual electrolyte solution described above was calculated to investigate the reaction reversibility. The Coulombic efficiency as used herein is defined as charge capacity (capacity of extraction of lithium ions form VS₄)/discharge capacity (capacity of insertion of lithium ions into VS₄) and is an indicator of the reaction reversibility. Fig. 2 shows the obtained Coulombic efficiency vs. cycle number plot.

As shown in Fig. 2, when the LiFSI:EC:PC:HFE = 1:1.5:1.5:1.5 (molar ratio) electrolyte solution (Example 1) was used and when the LiFSI:EC:PC:HFE = 1:1:1:1 (molar ratio) electrolyte solution (Example 2) was used, after the initial cycle, which includes an irreversible capacity derived from side reactions, such as reductive decomposition of the electrolyte solution, Coulombic efficiency of 99% or more was maintained up to 50 cycles. This indicates that the use of the electrolyte solution of the present invention can improve the charge-and-discharge efficiency of VS₄/lithium metal secondary batteries.

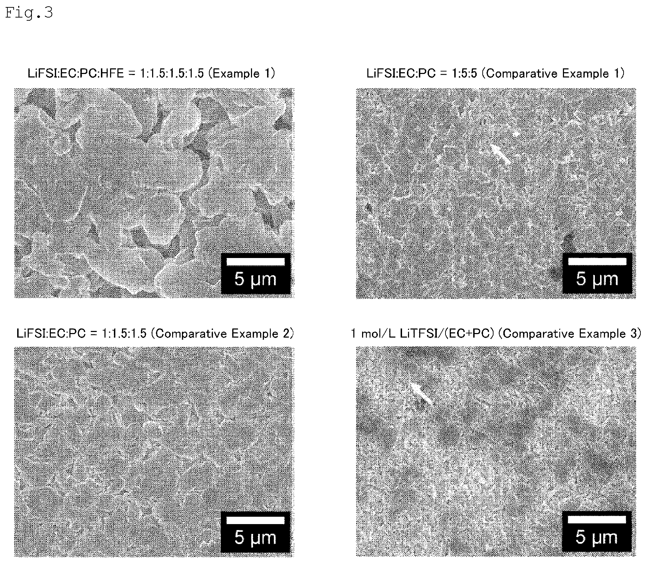

To demonstrate the effect of suppressing needle-like deposition of lithium metal by the electrolyte solution of the present invention, two-electrode cells were produced using the individual electrolyte solutions described above, a copper foil for a working electrode, and lithium metal for a counterelectrode, and a test for lithium deposition on the copper foil was performed. After the lithium deposition test, the cells were disassembled, and the morphology of lithium metal deposited on the copper foil was observed with a scanning electron microscope. The temperature was 25°C, the deposition capacity was 1.0 mAh/cm², and the current value was 0.5 mA/cm². Fig. 3 shows electron microscope images of lithium metal deposited on the copper foil.

As shown in Fig. 3, when the low-concentration 1 mol/L LiTFSI/(EC+PC) (EC:PC = 1:1 (volume ratio)) electrolyte solution (Comparative Example 3) was used and when the low-concentration LiFSI:EC:PC = 1:5:5 (molar ratio) electrolyte solution (Comparative Example 1) was used, needle-like or string-like lithium metal, as indicated by arrows in Fig. 3, was observed in a large amount. On the other hand, when the high-concentration LiFSI:EC:PC = 1:1.5:1.5 (molar ratio) electrolyte solution (Comparative Example 2) was used, almost no needle-like deposition was observed, and granular lithium metal was mainly deposited. In particular, when the LiFSI:EC:PC:HFE = 1:1.5:1.5:1.5 (molar ratio) electrolyte solution (Example 1) was used, large granules of lithium metal were deposited. This is due to the formation of a LiFSI-derived film with low interfacial resistance on the lithium metal surface. Thus, it was demonstrated that the use of the electrolyte solution of the present invention can prevent needle-like deposition of lithium metal.

## Claims

1. A nonaqueous secondary battery comprising vanadium sulfide as a cathode active material, a lithium-containing compound as an anode active material and a nonaqueous secondary battery electrolyte solution, the nonaqueous secondary battery electrolyte solution consisting of lithium bis(fluorosulfonyl)imide (LiFSI), cyclic carbonates, and a hydrofluoroether (HFE), wherein the molar ratio of the cyclic carbonates to the LiFSI (cyclic carbonates/LiFSI) is 3 or less.

2. The nonaqueous secondary battery according to claim 1, wherein the cyclic carbonates are ethylene carbonate (EC) and propylene carbonate (PC) in combination.

3. The nonaqueous secondary battery according to claim 1 or 2, wherein the lithium-containing compound is lithium metal.

## Patentansprüche

1. Eine nichtwässrige Sekundärbatterie, die Vanadiumsulfid als Kathodenaktivmaterial, eine lithiumhaltige Verbindung als Anodenaktivmaterial und eine nichtwässrige Sekundärbatterie-Elektrolytlösung umfasst, wobei die nichtwässrige Sekundärbatterie-Elektrolytlösung aus Lithiumbis(fluorsulfonyl)imid (LiFSI), cyclischen Carbonaten und einem Hydrofluorether (HFE) besteht, und wobei das Molverhältnis der cyclischen Carbonate zu LiFSI (cyclische Carbonate/LiFSI) 3 oder weniger beträgt.

2. Die nichtwässrige Sekundärbatterie nach Anspruch 1, wobei die cyclischen Carbonate Ethylencarbonat (EC) und Propylencarbonat (PC) in Kombination sind.

3. Die nichtwässrige Sekundärbatterie nach Anspruch 1 oder 2, wobei die lithiumhaltige Verbindung Lithiummetall ist.

## Revendications

1. Batterie secondaire non aqueuse comprenant du sulfure de vanadium comme matériau actif cathodique, un composé contenant du lithium comme matériau actif anodique et une solution électrolytique pour batterie secondaire non aqueuse, la solution électrolytique pour batterie secondaire non aqueuse étant constituée de bis(fluorosulfonyle)imide de lithium (LiFSI), de carbonates cycliques et d'un hydrofluoroéther (HFE), dans laquelle le rapport molaire des carbonates cycliques au LiFSI (carbonates cycliques/LiFSI) est inférieur ou égal à 3.

2. La batterie secondaire non aqueuse selon la revendication 1, dans laquelle les carbonates cycliques sont une combinaison de carbonate d'éthylène (EC) et de carbonate de propylène (PC).

3. La batterie secondaire non aqueuse selon la revendication 1 ou 2, dans laquelle le composé contenant du lithium est du lithium métallique.
